Europäisches Patentamt

European Patent Office

Office européen des brevets

(11) Publication number: **0 294 026 B1**

## EUROPEAN PATENT SPECIFICATION

(45) Date of publication of patent specification: **03.02.93**  (51) Int. Cl.⁵: **G01F  23/26**

(21) Application number: **88303841.6**

(22) Date of filing: **28.04.88**

(54) **Liquid quantity measurement.**

(30) Priority: **01.06.87 US 55846**

(43) Date of publication of application:
**07.12.88 Bulletin  88/49**

(45) Publication of the grant of the patent:
**03.02.93 Bulletin  93/05**

(84) Designated Contracting States:
**DE FR GB IT**

(56) References cited:
**GB-A- 2 117 520**
**US-A- 4 020 691**
**US-A- 4 259 865**

(73) Proprietor: **SIMMONDS PRECISION PRO-
DUCTS INC.
250 N. Cleveland-Massillon Road
Akron, Ohio 44334-050191(US)**

(72) Inventor: **Maier, Lawrence Carl
RD No. 1
Middlebury Vermont 05753(US)**

(74) Representative: **Foster, David Martyn et al
MATHISEN MACARA & CO. The Coach
House 6-8 Swakeleys Road
Ickenham Uxbridge UB10 8BZ(GB)**

**Description**

The invention relates to apparatus for measuring the quantity of a liquid in a tank, comprising: first capacitance means in the tank and positioned to be variably immersed by the liquid according to the amount of liquid in the tank, and having a first capacitance value which has a minimum value when the proportion of the effective height dimension of the capacitance means immersed by the liquid is a minimum proportion and which varies above this minimum value in dependence on the variation of the said proportion above the minimum proportion; second capacitance means in the tank and having a predetermined second capacitance value which is a reference value; an excitation source connected to energise the first and second capacitance means with an AC excitation signal whereby the first capacitance means produces a first measurement signal dependent on the first capacitance value and the second capacitance means produces a second measurement signal dependent on the second capacitance value; a first pair of oppositely poled diodes connected to receive in parallel the first measurement signal and to split it into two oppositely flowing currents; a second pair of oppositely poled diodes connected to receive in parallel the second measurement signal and to split it into two oppositely flowing currents; and current to voltage converting means connected to respond to the currents and to produce therefrom an indication of the quantity of liquid in the tank.

Such apparatus is known from US-A-4 259 865. In this apparatus, the signal produced by the second capacitance means is used to control the excitation signal, while the signal produced by the first capacitive means is used to produce the liquid quantity indicating signal. The aim is to render the liquid quantity indicating signal independent of variations in the excitation signal and of other variations. The invention provides an arrangement in which the liquid level indicating signal is produced as a ratio of signals respectively produced by the two capacitance means, thus avoiding the need for control or adjustment of the excitation signal.

Accordingly, such apparatus is characterised in that the second capacitance value is a predetermined value equal to the value of the first capacitance means under empty tank conditions; and the current to voltage converting means comprises (a) a first current to voltage converter connected to respond to the algebraic sum of one of the currents produced by the first diode pair and the oppositely flowing one of the currents produced by the second diode pair whereby to produce a first voltage output which is dependent on the magnitude of the excitation signal and on the amount by which the first capacitance value exceeds the minimum value thereof; and (b) a second current to voltage converter connected to respond to the other current produced by the second diode pair whereby to produce a second voltage output dependent on the magnitude of the excitation signal and on the second capacitance value; such that the ratio of the first and second voltage outputs provides a liquid quantity indicating signal indicative of the quantity of liquid in the tank and independent of variations in the excitation signal.

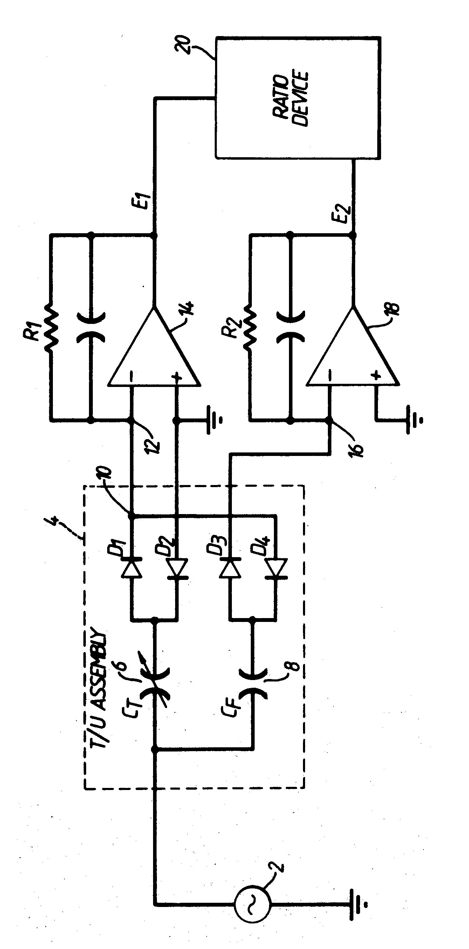

Liquid quantity measuring apparatus embodying the invention will now be described by way of example only, with reference to the accompanying drawing, the single Figure of which is a schematic circuit diagram of the apparatus.

The apparatus uses DC fuel tank measuring units and provides the benefits of immunity to variations in excitation voltage and frequency, insensitivity to temperature variations and DC diode characteristics even at low excitation voltages, and provides a true zero output when no fuel is sensed in the tank.

In brief, the apparatus consists of a tank measuring unit including a first, variable, capacitor and a second, fixed capacitor. The first capacitor has a capacitance value which varies in accordance with the quantity of fuel in the tanks. The second capacitor has a fixed capacitance value which is predetermined in accordance with an empty tank condition. Both capacitors are driven by an AC generator. A diode pair is coupled to each capacitor with the diodes of each pair being of opposite polarity. The capacitance of the fixed capacitor is predetermined to be equal to the empty capacitance of the tank unit. This may be accomplished at the factory by connecting each diode coupled to the variable capacitor to the oppositely poled one of the diodes coupled to the fixed capacitor. The fixed capacitor is then adjusted (by selection, trimmer, etc.) until the total current from the assembly is zero when excited by a sine wave at, for example, 6 KHz.

The factory calibrated probe assembly is then installed into a fuel tank using three wires and two DC amplifiers. The "positive" diode of the variable capacitor (i.e. the diode whose anode is connected to that capacitor) and the "negative diode" of the fixed capacitor (i.e. the diode whose cathode is connected to that capacitor) are connected to one DC amplifier. The negative diode of the variable capacitor is connected to the DC amplifier ground reference. The positive diode of the fixed capacitor is coupled to the second DC amplifier. Naturally, all diodes may be reversed to change polarity of the signal, if desired. The ratio of the outputs of the two DC amplifiers is now proportional to the added capacitance of the tank unit and accurately provides an output of the fluid volume within the tank. Since the signal is a ratio, it is independent of the excitation voltage and frequency and independent of diode thermal effects. Since diode characteristics no longer adversely effect the output, a much lower excitation voltage may be used.

The Figure depicts the apparatus. Signal generator 2 provides an AC, sine wave signal at a predetermined frequency. For example, a 6 KHz signal may be used. Signal generator 2 may be a sine wave oscillator or any other known or convenient means for generating the sine wave excitation voltage.

Within the tank unit assembly (T/U assembly) 4, is disposed a variable capacitor 6 having a capacitance value $C_T$. Also disposed within T/U assembly 4 is fixed capacitor 8 which has a capacitance value of $C_F$. One plate of each of capacitors 6 and 8 is provided with the excitation voltage from signal generator 2. The second plate of capacitor 6 is coupled to first rectifying means D1,D2, while the second plate of capacitor 8 is coupled to second rectifying means D3,D4.

In general, the current through a capacitive sensor excited by a sine wave of angular frequency w is as follows:

$$I = EwC \qquad (1)$$

where E is the peak voltage of the excitation source, and C is the capacitance of the sensor.

If a diode is inserted in series with this current, only positive or negative half cycles of the current will flow dependent upon the orientation of the diode. A positive and a negative diode are used in a pair to preserve AC current flow through the capacitive sensor. However, the diodes are used to steer positive current pulses to one return point, and the negative current pulses to another (or the same) return point. If the current out of one diode is returned to the summing node of an operational amplifier with low pass filter characteristics and a feedback resistor of value R, then only the DC component of the current remains and the rectified output voltage will be DC and as follows:

$$V_{DC} = E \, wCR/pi \qquad (2)$$

The above-stated relationships are well known by those versed in the art.

In general, the concept and advantages of a capacitive sensor with diodes is well-known. The benefits include simple signal conditioning and the elimination of a shielded cable for the output signal. However, such known systems are still sensitive to the value of the excitation voltages and to changes in the diode characteristics, and produce an output even when the sensed quantity of fuel is zero. The apparatus therefore uses the steering ability of the diodes to produce a capacitive sensor system which is insensitive to diode characteristics, excitation voltage and frequency, and which produces a true zero output when the sensed quantity is zero.

The capacitance value of capacitor 6 may be quantified as follows:

$$C_T = alpha(K-1)C_{at} + C_{et} \qquad (3)$$

where: alpha is the height of the sensed dielectric material (e.g., the fuel), K is the dielectric constant of the material (e.g., the fuel dielectric constant), $C_{at}$ is the active capacitance of the sensor and is a constant, and $C_{et}$ is the sensor capacitance in air which is also a constant.

As described above, when the sensor assembly is built, diodes D1 and D4 are tied together and diodes D2 and D3 are also tied together. The sensor is then excited by a sine wave source and the capacitance value of capacitor 8 is adjusted such that the total output current of each diode pair is zero. Therefore, the following relationship holds:

$$C_F = C_{et} \qquad (4)$$

The output current from the capacitor 6 through diode D1 is as follows:

$$DC \ current \ D1 = EwC_T/pi \qquad (5)$$

Likewise, the DC current from capacitor 8 through diode D4 is as follows:

$$DC \ current \ D4 = EwC_F/pi \qquad (6)$$

The output currents through diodes D1 and D4 are summed at node 10 and directed to the summing junction 12 of operational amplifier 14. The output of operational amplifier 14 is a voltage signal E1. Since the inverting input of operational amplifier 14 receives DC current from both diodes D1 and D4, the output voltage E1 of operational amplifier 14 may be calculated as follows:

$$E_1 = (C_T - C_F)(EwR1)/pi \qquad (7)$$

where R1 = the resistance value of resistor R1 in the feedback path of operational amplifier 14.

Since $C_F - C_{et}$ (see equation (4)), and since equation (3) may be restated as follows:

$$C_{et} = C_T - alpha\ (K-1)C_{at} \qquad (8)$$

then, the output voltage $E_1$ of operational amplifier 14 may be stated as follows:

$$E_1 = alpha\ (K-1)C_{at}(EwR1)/pi \qquad (9)$$

In a like manner, the DC current through diode D3 may be stated as follows:

$$DC\ current\ D_3 - EwC_F/pi \qquad (10)$$

Since $C_F - C_{et}$ (see equation (4)), DC current through diode D3 may be stated as follows:

$$DC\ current\ D3 = EwC_{et}/pi \qquad (11)$$

The DC current from diode D3 is provided to the summing node 16 of operational amplifier 18. Thus, the inverting input of operational amplifier 18 receives the DC current from diode D3. Operational amplifier 18 includes a feedback path having a resistor R2 of resistance value R2. The non-inverting input of operational amplifier 18 is coupled to ground. Thus, the output of operational amplifier 18 is a voltage signal $E_2$. This voltage signal $E_2$ may be calculated as follows:

$$E_2 = EwC_{et}R2/pi \qquad (12)$$

Thus, equations (9) and (12) provide output voltage signals reflecting the level of quantity of fuel in the tank and a fixed capacitance predetermined base on an empty tank. By forming a ratio of the voltage signals from each operational amplifier, the disadvantageous effects of diode characteristics and excitation voltage variations may be eliminated. The ratio of the first voltage signal $E_1$ to the second voltage signal $E_2$ may be calculated as follows:

$$E_1/E_2 = \frac{alpha(K-1)C_{at}(EwR1)/pi}{EwC_{et}R2/pi} \qquad \ldots\ldots\ldots\ldots (13)$$

$$= alpha(K-1)C_{at}R1/C_{et}R2 \qquad \ldots\ldots\ldots\ldots (14)$$

Since $C_{et}$ and $C_{at}$ are known constants, and if R1 and R2 are a known ratio (ratio-matched resistors are well known), then the resulting value is independent of excitation voltage E, excitation frequency w, and diode variations (which appear as excitation voltage changes), and produces an output of zero when the measured parameter is in fact zero. In fact, if R1 and R2 are selected to be accurate and stable resistors, then the ratio output signal is only dependent on the desired measured parameter which is the product alpha(K-1). Needless to say, it is ratio device 20 which performs the necessary ratio calculations and provides the appropriate output signal.

Since both sets of diodes are in the same thermal environment, diode effects are also cancelled in the ratio signal. Since the diode characteristics no longer affect the output, much lower excitation voltages may

4

be used without compromising system accuracy.

Thus, what has been described is a simplified, streamlined structure for providing a very accurate output signal indicative of the level of fuel within a tank. The output signal is immune to variations in excitation voltage and frequency and, diode characteristics, and produces a true zero output signal when no fuel is in the tank. Ratio device 20, may, for example, be a display unit, a microprocessor, or any known and convenient device for performing the ratio operations and providing the appropriate output signal.

**Claims**

1. Apparatus for measuring the quantity of a liquid in a tank, comprising:

first capacitance means (6) in the tank and positioned to be variably immersed by the liquid according to the amount of liquid in the tank, and having a first capacitance value which has a minimum value when the proportion of the effective height dimension of the capacitance means (6) immersed by the liquid is a minimum proportion and which varies above this minimum value in dependence on the variation of the said proportion above the minimum proportion;

second capacitance means (8) in the tank and having a predetermined second capacitance value which is a reference value;

an excitation source (2) connected to energise the first and second capacitance means (6,8) with an AC excitation signal whereby the first capacitance means (6) produces a first measurement signal dependent on the first capacitance value and the second capacitance means (8) produces a second measurement signal dependent on the second capacitance value;

a first pair of oppositely poled diodes (D1,D2) connected to receive in parallel the first measurement signal and to split it into two oppositely flowing currents;

a second pair of oppositely poled diodes (D3,D4) connected to receive in parallel the second measurement signal and to split it into two oppositely flowing currents; and

current to voltage converting means (14,18) connected to respond to the currents and to produce therefrom an indication of the quantity of liquid in the tank;

characterised in that

the second capacitance value is a predetermined value equal to the value of the first capacitance means under empty tank conditions; and

the current to voltage converting means (14,18) comprises (a) a first current to voltage converter (14) connected to respond to the algebraic sum of one of the currents produced by the first diode pair (D1,D2) and the oppositely flowing one of the currents produced by the second diode pair (D3,D4), whereby to produce a first voltage output which is dependent on the magnitude of the excitation signal and on the amount by which the first capacitance value exceeds the minimum value thereof; and (b) a second current to voltage converter (18) connected to respond to the other current produced by the second diode pair (D3,D4) whereby to produce a second output voltage output dependent on the magnitude of the excitation signal and on the second capacitance value; such that the ratio of the first and second voltage outputs provides a liquid quantity indicating signal indicative of the quantity of liquid in the tank and independent of variations in the excitation signal.

2. Apparatus according to claim 1, characterised by a ratio device (20) receiving the first and second voltage output signals and measuring their ratio to produce the said liquid quantity indicating signal.

3. Apparatus according to claim 1 or 2, characterised in that each current to voltage converter comprises a respective operational amplifier (14,18).

4. Apparatus according to claim 3, characterised in that the operational amplifier (14) comprised by the first current to voltage converter has its inverting input connected to one (D1) of the diodes of the first pair (D1,D2) and to the oppositely poled one (D4) of the diodes of the second pair (D3,D4) so as to receive the said algebraic current sum.

5. Apparatus according to claim 3 or 4, characterised in that the operational amplifier (18) comprised by the second current to voltage converter has its inverting input connected to the other diode (D3) of the second pair of diodes (D3,D4).

6. Apparatus according to any one of claims 3 to 5, characterised in that the non-inverting input of each operational amplifier (14,18) is connected to ground.

**7.** Apparatus according to any one of claims 3 to 6, characterised in that each operational amplifier (14,18) has a feedback path including respective resistor means (R1,R2) whose values have a predetermined ratio.

**8.** Apparatus according to any preceding claim, characterised in that the said second capacitance means (8) is positioned in the tank.

**Patentansprüche**

**1.** Einrichtung zum Messen der Menge einer Flüssigkeit in einem Tank, bestehend aus:

einem ersten Kapazitätsmittel (6) in dem Tank, so angebracht, daß es je nach der Flüssigkeitsmenge im Tank veränderlich in die Flüssigkeit eintaucht, und mit einem ersten Kapazitätswert, welcher einen Mindestwert aufweist, wenn der in die Flüssigkeit eingetauchte Anteil des effektiven Höhenmaßes des Kapazitätsmittels (6) ein Mindestanteil ist, und welcher sich über diesem Mindestwert in Abhängigkeit von der Veränderung des besagten Anteils über dem Mindestanteil ändert;

einem zweiten Kapazitätsmittel (8) in dem Tank, mit einem vorbestimmten zweiten Kapazitätswert, welcher einen Bezugswert darstellt;

einer zur Erregung des ersten und zweiten Kapazitätsmittels (6,8) mit einem Wechselstromerregungssignal angeschlossenen Erregerquelle (2), wodurch das erste Kapazitätsmittel (6) in Abhängigkeit von dem ersten Kapazitätswert ein erstes Meßsignal, und das zweite Kapazitätsmittel (8) in Abhängigkeit von dem zweiten Kapazitätswert ein zweites Meßsignal erzeugt;

einem ersten Paar entgegengesetzt gepolter Dioden (D1,D2), so geschaltet, daß sie das erste Meßsignal parallel aufnehmen und es in zwei entgegengesetzt fließende Ströme aufspalten;

einem zweiten Paar entgegengesetzt gepolter Dioden (D3,D4), so geschaltet, daß sie das zweite Meßsignal parallel aufnehmen und es in zwei entgegengesetzt fließende Ströme aufspalten;

Strom-Spannungs-Umsetzmitteln (14,18), so geschaltet, daß sie auf die Ströme ansprechen und daraus eine Anzeige der Flüssigkeitsmenge in dem Tank erstellen;

dadurch gekennzeichnet, daß

der zweite Kapazitätswert ein vorbestimmter Wert gleich dem Wert des ersten Kapazitätsmittels unter Leertankbedingungen ist; und

die Strom-Spannungs-Umsetzmittel (14,18) (a) einen ersten Strom-Spannungs-Umsetzer (14), welcher so geschaltet ist, daß er auf die algebraische Summe eines der durch das erste Diodenpaar (D1,D2) erzeugten Ströme und des entgegengesetzt fließenden, durch das andere Diodenpaar (D3,D4) erzeugten Stroms anspricht und so eine erste Ausgangsspannung erzeugt, welche von der Größe des Erregungssignals und von dem Betrag abhängt, um welchen der erste Kapazitätswert dessen Mindestwert übertrifft, und (b) einen zweiten Strom-Spannungs-Umsetzer (18), welcher so geschaltet ist, daß er auf den anderen durch das zweite Diodenpaar (D3,D4) erzeugten Strom anspricht und so eine zweite Ausgangsspannung erzeugt, welche von der Größe des Erregungssignals und von dem zweiten Kapazitätswert abhängt, umfassen;

so beschaffen, daß das Verhältnis der ersten und zweiten Ausgangsspannung ein Flüssigkeitsmengenanzeigesignal ergibt, welches die Flüssigkeitsmenge in dem Tank anzeigt und von Veränderungen des Erregungssignals unabhängig ist.

**2.** Einrichtung nach Anspruch 1, gekennzeichnet durch eine Verhältnisvorrichtung (20), welche die ersten und zweiten Spannungsausgangssignale empfängt und deren Verhältnis mißt, um besagtes Flüssigkeitsmengenanzeigesignal zu erzeugen.

**3.** Einrichtung nach Anspruch 1 oder 2, dadurch gekennzeichnet, daß jeder der Strom-Spannungs-Umsetzer jeweils einen Operationsverstärker (14,18) umfaßt.

**4.** Einrichtung nach Anspruch 3, dadurch gekennzeichnet, daß der in dem ersten Strom-Spannungs-Umsetzer enthaltene Operationsverstärker (14) an seinem invertierenden Eingang mit einer (D1) der Dioden des ersten Paars (D1,D2) und mit der entgegengesetzt gepolten (D4) der Dioden des zweiten Paars (D3,D4) so verbunden ist, daß er die besagte algebraische Stromsumme empfängt.

**5.** Einrichtung nach Anspruch 3 oder 4, dadurch gekennzeichnet, daß der in dem zweiten Strom-Spannungs-Umsetzer enthaltene Operationsverstärker (18) an seinem invertierenden Eingang mit der anderen Diode (D3) des zweiten Diodenpaars (D3,D4) verbunden ist.

**6.** Einrichtung nach einem der Ansprüche 3 bis 5, dadurch gekennzeichnet, daß der nichtinvertierende Eingang jedes der Operationsverstärker (14,18) geerdet ist.

**7.** Einrichtung nach einem der Ansprüche 3 bis 6, dadurch gekennzeichnet, daß jeder der Operationsverstärker (14,18) einen Rückkopplungsweg einschließlich jeweiliger Widerstandsmittel (R1,R2), deren Werte in einem vorbestimmten Verhältnis zueinander stehen, aufweist.

**8.** Einrichtung nach einem der vorhergehenden Ansprüche, dadurch gekennzeichnet, daß besagtes zweites Kapazitätsmittel (8) in dem Tank angebracht ist.

**Revendications**

**1.** Dispositif pour mesurer la quantité d'un liquide dans un réservoir, comprenant :
des premiers moyens capacitifs (6) situés dans le réservoir et positionnés de manière à être immergés de façon variable dans le liquide en fonction de la quantité de liquide dans le réservoir, et possédant une première valeur capacitive qui est minimale lorsque le pourcentage de la dimension en hauteur effective d'immersion des moyens capacitifs (6) dans le liquide est un pourcentage minimal, et qui varie au-dessus de cette valeur minimale en fonction de la variation dudit pourcentage au-dessus du pourcentage minimal ;
des seconds moyens capacitifs (8) situés dans le réservoir et possédant une seconde valeur capacitive prédéterminée, qui est une valeur de référence;
une source d'excitation (2) raccordée de manière à exciter les premiers et seconds moyens capacitifs (6,8) avec un signal d'excitation à courant alternatif, ce qui a pour effet que les premiers moyens capacitifs (6) produisent un premier signal de mesure en fonction de la première valeur capacitive et que les seconds moyens capacitifs (8) produisent un second signal de mesure en fonction de la seconde valeur capacitive;
un premier couple de diodes (D1,D2) polarisées en des sens opposés et raccordées de manière à recevoir en parallèle le premier signal de mesure et à le subdiviser en deux courants circulant en des sens opposés;
un second couple de diodes (D3,D4) polarisées en des sens opposés et raccordées de manière à recevoir en parallèle le second signal de mesure et à le subdiviser en deux courants circulant en des sens opposés; et
des moyens (14,18) de conversion en couranttension raccordés de manière à répondre aux courants et à produire, à partir de là, une indication de la quantité de liquide dans le réservoir;
caractérisé en ce que la seconde valeur capacitive est une valeur prédéterminée égale à la valeur des premiers moyens capacitifs dans des conditions correspondant au réservoir vide; et
les moyens (14,18) de conversion courant-tension comprennent (a) un premier convertisseur courant-tension (14) raccordé de manière à répondre à la somme algébrique de l'un des courants produits par le premier couple de diodes (D1,D2) et de celui, qui circule en sens opposé, des courants produits par le second couple de diodes (D3,D4), de manière à produire une première tension de sortie, qui dépend de l'amplitude du signal d'excitation et de la quantité dont la première valeur capacitive dépasse la valeur capacitive minimale; et (b) un second convertisseur courant-tension (18) raccordé de manière à répondre à l'autre courant produit par le second couple de diodes (D3,D4), de manière à produire une seconde tension de sortie qui est fonction de l'amplitude du signal d'excitation et de la seconde valeur capacitive; de sorte que le rapport entre les première et seconde tensions de sortie fournit un signal d'indication de quantité de liquide, qui est indicatif de la quantité de liquide présente dans le réservoir et est indépendant de variations du signal d'excitation.

**2.** Dispositif selon la revendication 1, caractérisé par un dispositif (20) de production d'un rapport, qui reçoit les premier et second signaux de tension de sortie et mesure leur rapport de manière à produire ledit signal d'indication de quantité de liquide.

**3.** Dispositif selon la revendication 1 ou 2, caractérisé en ce que chaque convertisseur courant-tension comprend un amplificateur opérationnel respectif (14,18).

**4.** Dispositif selon la revendication 3, caractérisé en ce que l'entrée inverseuse de l'amplificateur opérationnel (14) constitué par le premier convertisseur courant-tension est raccordé à celle (D1) des diodes du premier couple de diodes (D1,D2) et à celle (D4), qui est polarisée en sens opposé, des diodes du second couple (D3,D4) de manière à recevoir ladite somme algébrique des courants.

5. Dispositif selon la revendication 3 ou 4, caractérisé en ce que l'entrée inverseuse de l'amplificateur opérationnel (18) constitué par le second convertisseur courant-tension est raccordée à l'autre diode (D3) du second couple de diodes (D3,D4).

6. Dispositif selon l'une quelconque des revendications 3 à 5, caractérisé en ce que l'entrée non inverseuse de chaque amplificateur opérationnel (14,18) est raccordée à la masse.

7. Dispositif selon l'une quelconque des revendications 3 à 6, caractérisé en ce que chaque amplificateur opérationnel (14,18) comporte un trajet de réaction comprenant des moyens respectifs de résistance (R1, R2), dont les valeurs sont entre elles dans un rapport déterminé.

8. Dispositif selon l'une quelconque des revendications précédentes, caractérisé en ce que lesdits seconds moyens capacitifs (8) sont disposés dans le réservoir.

RATIO DEVICE

20

E1

E2

R1

R2

14

18

12

16

10

4

D1 D2 D3 D4

T/U ASSEMBLY

$C_T$ 6

$C_F$ 8

2